Europäisches Patentamt

European Patent Office

Office européen des brevets

(11) Veröffentlichungsnummer: **0 002 483**
**A1**

# (12) EUROPÄISCHE PATENTANMELDUNG

(21) Anmeldenummer: 78101545.8

(51) Int. Cl.²: **B 23 K 11/02**

(22) Anmeldetag: 04.12.78

(30) Priorität: 08.12.77 DE 2754660

(43) Veröffentlichungstag der Anmeldung:
27.06.79 Patentblatt 79/13

(84) Benannte Vertragsstaaten:
DE FR GB IT NL SE

(71) Anmelder: **Industrie-Werke Karlsruhe Augsburg
Aktiengesellschaft
Gartenstrasse 71
D-7500 Karlsruhe 1(DE)**

(72) Erfinder: **Ganowski, Franz-Josef, Dipl.-Ing.
Haus-Nr. 46
D-8901 Maingründel(DE)**

(72) Erfinder: **Pache, Norbert
Zusmarshauser Weg 7 a
D-8900 Augsburg(DE)**

(72) Erfinder: **Merk, Hans-Joachim
Haus-Nr. 61
D-8901 Altenmünster(DE)**

(74) Vertreter: **Zahn, Roland, Dipl.-Ing. et al,
Industrie-Werke Karlsruhe Augsburg AG Gartenstrasse
71
D-7500 Karlsruhe 1(DE)**

(54) Vorrichtung zur Abstands-Positionierung eines Werkstücks.

(57) Bei einer Vorrichtung zur exakten Positionierung eines zweiten Werkstücks (2) in vorgegebenen Abstand (X) zu einem ortsfest liegenden ersten Werkstück (1) wird zwecks Vereinfachung und Verbesserung der Reproduzierbarkeit über Transportmittel (5) zunächst das zweite Werkstück (2) auf Anschlag an das erste herangebracht und anschließend auf den gewünschten Abstand (X) abgehoben.

Die Vorrichtung findet vorzugsweise Einsatz bei automatisierten Schweißprozessen, bei denen zwei Werkstücke miteinander zu verschweißen sind.

EP 0 002 483 A1

./...

FIG.

Vorrichtung zur Abstands-Positionierung eines Werkstücks

Die vorliegende Erfindung bezieht sich auf eine Vorrichtung zur genauen und reproduzierbaren Positionierung eines zweiten Werkstücks in einem vorgegebenen Abstand von einem ortsfest liegenden ersten Werkstück. Eine derartige Vorrichtung findet insbesondere bei der Automatisierung von Schweißvorgängen Verwendung, da bekanntlich eine gleichbleibende Qualität einer Schweißnaht dann und nur dann erreichbar ist, wenn bei konstant gehaltenen elektrischen Schweißparametern Strom und Spannung auch die Lichtbogenlänge konstant gehalten werden kann.

Da nun jedoch die miteinander zu verschweißenden Werkstücke im allgemeinen vor dem Verschweißen mechanisch bearbeitet, insbesondere abgelängt werden, sind diese Werkstücke hinsichtlich ihrer Längen auch mit Maßabweichungen behaftet. Dies bedeutet nun, daß beim Zusammenführen zweier miteinander zu verschweißender Werkstücke infolge der Unabhängigkeit der Werkstück-Toleranzen einerseits und der Positioniermittel andererseits die Werkstück-Toleranzen direkt bei der Breite des Luftspalts und damit bei der Länge des Lichtbogens einfließen. Dies beeinflußt, wie erwähnt, die Qualität der Schweißnaht insofern, als nacheinander verschweißte Teile unterschiedlich gut miteinander verschweißt sind.

Eine gleichbleibende Schweißqualität ist somit nur erreichbar, wenn bei der Einstellung des Luftspalts zwischen den miteinander zu verschweißenden Werkstücken eine die Längentoleranzen ausgleichende Korrektur erfolgt.

Zur grundsätzlichen Lösung der der vorliegenden Erfindung zugrundeliegenden Problematik ist es bekannt, zwischen die zu verschweißenden Werkstücke ein sogenanntes Distanzschwert zu schieben, gegen welches die Werkstücke angedrückt und damit in ihrem Abstand zueinander definiert werden. Vor dem eigentlichen Schweißvorgang wird das Distanzschwert aus dem Freiraum zwischen den zu verschweißenden Werkstücken herausgezogen, so daß nunmehr für den Schweißvorgang selbst ein definierter Abstand gegeben ist. Auf diese Weise ist jederzeit reproduzierbar ein konstanter Luftspalt einstellbar. Es ist aber ohne weiteres ersichtlich, daß diese Verfahrensweise mit den Distanzschwertern umständlich und zeitraubend ist und somit einer angestrebten Automatisierung entgegensteht.

Die der vorliegenden Erfindung zugrundeliegende Aufgabe besteht mithin darin, eine einfache und ohne weiteres in einem Automationsprozeß einsatzfähige Vorrichtung zur exakten Abstandspositionierung eines Werkstückes anzugeben.

Diese Aufgabe wird dadurch gelöst, daß Transportmittel vorgesehen sind, die in einem ersten Arbeitsgang das zu positionierende Werkstück auf Anschlag an das erste Werkstück heranführen und in einem zweiten Arbeitsgang das zu positionierende Werkstück um das Maß des vorgegebenen Abstands vom ersten Werkstück wegführen. Weitere Ausgestaltungen der Erfindung ergeben sich aus den Unteransprüchen.

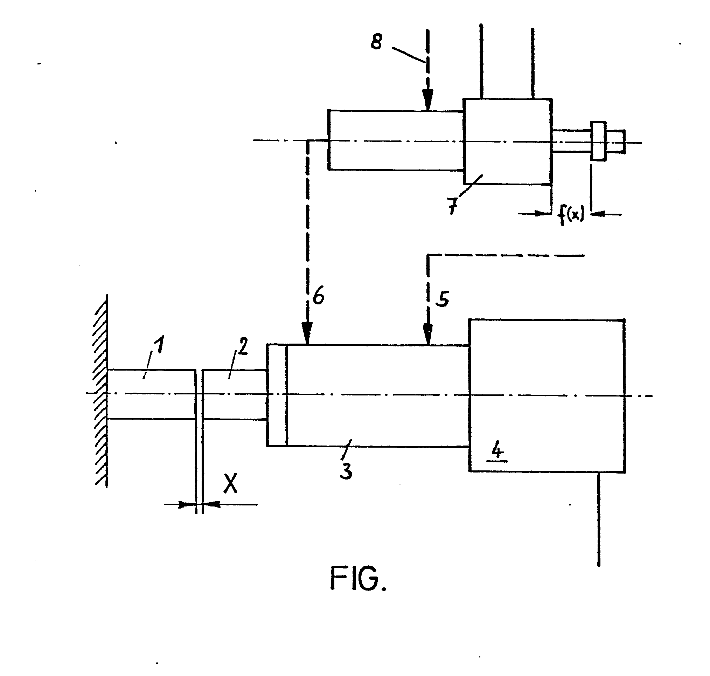

Die Erfindung wird im Folgenden anhand der Zeichnung näher erläutert. Hierbei ist ein Ausführungsbeispiel im Sinne der Unteransprüche beschrieben.

Dargestellt ist ein erstes, ortsfest liegendes Werkstück 1, das mit einem zweiten, in einem vorgegebenen Abstand x gegenüberliegenden Werkstück 2 verschweißt werden soll. Das Werkstück 1 ist fest eingespannt; das Werkstück 2 ist mit einem Kolben 3 eines pneumatischen oder hydraulischen Zylinders 4 verbunden. Dieser Kolben 3 ist - bezogen auf die gezeichnete Darstellung - einerseits über eine erste Wirkleitung 5 nach links in Richtung erstes Werkstück 1 und andererseits über eine zweite Wirkleitung 6 nach rechts, in Richtung Zylinder 4 verschiebbar. Diese Rechtsverschiebung des Kolbens 3 wird über einen zweiten, sogenannten Dosierzylinder 7 initiiert.

Im Folgenden soll die Arbeitsweise der erfindungsgemäßen Vorrichtung beschrieben werden.
Zunächst wird das erste Werkstück 1 eingespannt. Daran anschließend wird das zweite Werkstück 2 mit dem Kolben 3 verbunden, so daß eine Kolbenbewegung unmittelbar einer Werkstückbewegung entspricht. In einem ersten von der Wirkleitung 5 initiierten Arbeitsgang wird nun der Kolben 3 so weit aus dem als Anschlagzylinder 4 bezeichneten Zylinder getrieben, bis das Werkstück 2 am Werkstück 1 ansteht. Das Werkstück 1 dient mithin als Anschlag für das Werkstück 2.

In einem zweiten Arbeitsgang wird nun der Kolben 3 um das durch die geforderte Schweißqualität bestimmte Abstandsmaß x in den Anschlagzylinder 4 zurückgedrückt. Dieses Zurückschieben des Kolbens 3 in den Anschlagzylinder 4 hinein wird durch den Dosierzylinder 7 eingeleitet und begrenzt und zwar derart, daß ein exakt einstellbarer Arbeitshub eines Kolbens in diesem Dosierzylinder 7 den Rückstellhub des Kolbens 3 bestimmt. Die Einstellung des Arbeitshubs im Dosierzylinder 7 kann, wie zeichnerisch angedeutet, über einen mechanischen Anschlag vorgenommen werden, wobei dessen Arbeitshub mithin eine Funktion $f(x)$ des Abstandsmaßes x ist. (Der gestrichelt gezeichnete mechanische Anschlag entspricht der Anschlagstellung des zweiten Werkstücks 2, d.h. dem Fall $x = 0$.)

In der Praxis sieht das Ganze so aus, daß über den von einer Wirkleitung 8 getriebenen Kolben des Dosierzylinders 7 vermittels einer Wirkleitung 6 ein derart vorgegebenes dem Abstandsmaß x entsprechendes Quantum Druckenergie auf den Kolben 3 des Anschlagzylinders 4 übertragen wird, daß dieser Kolben den der vorgegebenen Druckenergie entsprechenden Weg zurücklegt, und zwar in Richtung Anschlagzylinder 4. Mittels der erfindungsgemäßen Vorrichtung wird nun eine stets gleichbleibende Schweißqualität der Schweißnaht gewährleistet, wobei nicht nur Werkstück-Toleranzen der zu verschweißenden
Werkstücke selbst, sondern auch Lageungenauigkeiten
ausgeglichen sind.

0002483

PATENTANSPRÜCHE

1. Vorrichtung zur

genauen und reproduzierbaren Positionierung eines zweiten Werkstücks in einem vorgegebenen Abstand von einem ortsfest liegenden ersten Werkstück, insbesondere zur Anwendung bei stumpf miteinander zu verschweißenden Teilen,

dadurch gekennzeichnet,

daß Transportmittel vorgesehen sind, die in einem ersten Arbeitsgang das zu positionierende Werkstück auf Anschlag an das erste Werkstück heranführen und

in einem zweiten Arbeitsgang das zu positionierende Werkstück um das Maß des vorgegebenen Abstands vom ersten Werkstück wegführen.


2. Vorrichtung nach Anspruch 1,

dadurch gekennzeichnet,

daß die Transportmittel durch einen mit dem zu positionierenden Werkstück verbundenen Kolben eines Zylinders realisiert sind.

3. Vorrichtung nach Anspruch 2,

dadurch gekennzeichnet,

daß ein erster Zylinder (Anschlagzylinder) vorgesehen ist, der den Kolben im ersten Arbeitsgang auf Anschlag bewegt und

daß ein zweiter Zylinder (Dosierzylinder) vorgesehen ist, der den Kolben im zweiten Arbeitsgang in die Endposition zurückbewegt.

FIG.

Europäisches
Patentamt

**EUROPÄISCHER RECHERCHENBERICHT**

Nummer der Anmeldung

EP 78 10 1545

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe. soweit erforderlich. der maßgeblichen Teile | betrifft Anspruch | B 23 K 11/02 |
| X | DE - A - 1 914 834 (FEIGHTER) <br> * Seite 38, Zeilen 13-27 * <br> -- | 1 | |
| | FR - A - 2 289 287 (SCIAKY) <br> * Seite 7, Zeilen 24-38 * <br> -- | 2 | |
| | US - A - 2 276 354 (BABCOCK & WILCOX) <br> * Figuren 1,13-19; Seite 2, linke Spalte, Zeilen 44-53 * <br> -- | 1,2 | |

RECHERCHIERTE SACHGEBIETE (Int. Cl.³)

B 23 K 11/02
11/04
9/22

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-03-1979 | HOORNAERT |

EPA form 1503.1 06.78